# EUROPEAN PATENT APPLICATION

(11) **EP 1 947 600 A2**
(43) Date of publication of application: **23.07.2008**
(21) Application number: 08100530.8
(22) Date of filing: 16.01.2008
(51) Int. Cl.: G06Q 20/00

(54) **Bill payment card method and system**

(30) Priority: 16.01.2007 US 885044 P; 07.02.2007 US 672081
(71) Applicant: E2Interactive, Inc. D/B/A E2Interactive, Inc., Atlanta, GA 30303 (US)
(72) Inventor: Graves, Philips, Atlanta, GA 30342 (US); Chakiris, Phil, Atlanta, GA 30327 (US); Young, Dustin, Denver, CO 80209 (US); Denzer, Karl, Denver, CO 80202 (US)
(74) Representative: Bankes, Stephen Charles Digby

(57) **Abstract**

The invention is directed to a system and method for managing a payment system. The method generally comprises activating a payment card, associating a value with the payment card, associating at least one third party with the bill payment card, receiving a request from a bill payment card user to transfer at least some of the value to a selected third party, the request comprising receiving an identifier associated with the payment card and receiving an indication of an amount of value to transfer, and transferring at least some of the value to the selected third party. Systems of the invention may generally comprise one or more payment cards, a database storing a plurality of records comprising information related to the payment card; one or more communication devices; and a processor in communication with the database and in selective communication with the communication device.

## Description

### BACKGROUND OF TFIE INVENTION

The present invention generally relates to a method and system for making payments to a third party. Specifically, the present invention is directed to making payments to a third party in which value associated with a stored value card is transferred to the third party.

It is commonplace for customers to purchase goods or services on credit and later receive bills from the provider of the goods or services requesting payment. Traditionally, the customer satisfies the bill by providing payment in the form of a note, draft (e.g., a check), or money order. Alternatively, a customer may satisfy the debt by use of a credit card, either by having the amount owed to the biller each month automatically charged to the credit card or by entering credit card information on an invoice authorizing the biller to charge the credit card for the amount owed on the invoice. More recently, online payment methods have become available, where a customer may make payments using the Internet, typically through a biller's or a bank's website.

These known methods and systems generally require a bank, checking account, or a credit card. Some customers, however, may not have or may not prefer to use their bank account or credit card when making certain payments. A typical alternative is the use of a money order. A money order, however, has its own drawbacks, including inconvenience, the payment of additional fees, and postage.

Accordingly, a system and method that may allow for the payment of bills and other debts owed without the use of a bank account, credit card, or money order is desirable.

### SUMMARY OF THE INVENTION

Aspects of the present invention include systems and methods for managing a payment system. Some methods of the invention may generally comprise activating a payment card, associating a value with the payment card, associating at least one third party with the bill payment card, receiving a request from a bill payment card user to transfer at least some of the value to a selected third party, the request comprising receiving an identifier associated with the payment card and receiving an indication of an amount of value to transfer, and transferring at least some of the value to the selected third party. Some systems of the invention may generally comprise one or more payment cards, a database storing a plurality of records comprising information related to the payment card; one or more communication devices; and a processor in communication with the database and in selective communication with the communication device.

These and other aspects will become apparent from the following description of exemplary embodiments of the invention taken in conjunction with the following drawings, although variations and modifications may be effected without departing from the spirit and scope of the novel concepts of the disclosure.

It is to be understood that both the foregoing general description and the following detailed description are exemplary and explanatory only, and are not restrictive of the invention as claimed. The accompanying drawings constitute a part of the specification, illustrate certain embodiments of the invention and, together with the detailed description, serve to explain the principles of the invention.

### DESCRIPTION OF THE DRAWINGS

In order to assist in the understanding of the invention, reference will now be made to the appended drawings, in which like reference characters refer to like elements. The drawings are exemplary only, and should not be construed as limiting the invention.

Fig. 1 is a diagram of a bill payment card system in accordance with some embodiments of the invention.

Fig. 2 is a diagram of a processor configured to manage a bill payment card system in accordance with some embodiments of the invention.

Fig. 3 is a flowchart illustrating a method for managing a bill payment card system in accordance with some embodiments of the invention.

Fig. 4 is a flowchart illustrating a method for managing an initial use of a bill payment card in a bill payment card system in accordance with some embodiments of the invention.

Fig. 5 is a flowchart illustrating a method for managing a transaction involving a bill payment card system in accordance with some embodiments of the invention.

Fig. 6 is a flowchart illustrating a method for making payments to one or more billers by a customer using a bill payment card purchased from a retailer in accordance with some embodiments of the invention.

Fig. 7 is a flowchart illustrating a method for performing a transaction involving a bill payment card system in accordance with some embodiments of the invention.

Fig. 8 is a flowchart illustrating a method for making payments to a biller using a bill payment card system in accordance with some embodiments of the invention.

### DETAILED DESCRIPTION OF THE INVENTION

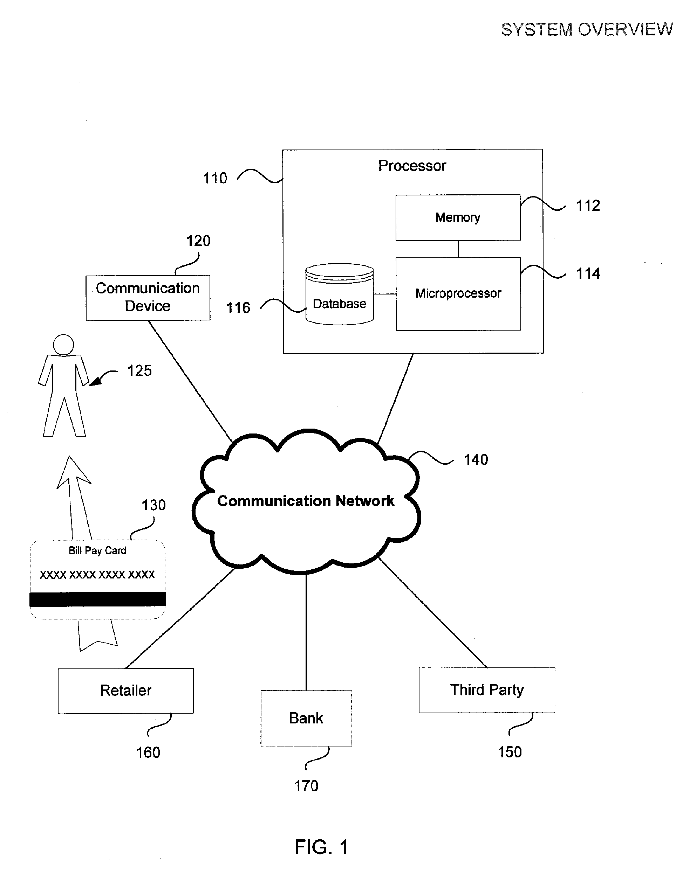

With reference to Fig. 1, a bill payment card system 100 may comprise a bill payment card 130, a processor 110, a user 125, a third party 150, a communication device 120, and a communication network 140. In some embodiments of the invention, a user 125 may obtain and associate value with a bill payment card 130, communicate information to and from the processor 110 over a communication network 140 using a communication device 120, and direct the processor 110 to transfer value associated with the bill payment card 130 to a third party 150.

In some embodiments, the bill payment card system 100 may comprise a retailer 160, where a user 125 may purchase a bill payment card 130 and/or perform transactions using the bill payment card 130. Further, the bill payment card system 100 may comprise a bank 170 that manages financial accounts associated with the bill payment card 130 and/or the third party 150. The bill payment card 130 may not contain any actual value. Instead, value may be in an account associated with the bill payment card 130. For simplicity of discussion, however, transactions discussed below may refer to value "on" or transferred "to" or "from" a bill payment card 130. Such value transactions are to be understood to include "to," "from," or "on" an account associated with the bill payment card 130.

The bill payment card 130 may be of any physical shape and configuration, and also may comprise any type of material. In some embodiments of the invention, the bill payment card 130 may be configured the same or similar to a standard credit or debit card, made of plastic and having the same or similar proportions and features. In some embodiments of the invention, the bill payment card 130 may be card-like, but have different proportions than a standard credit or debit card, e.g., a keychain card, a folding paper card, a metal card, and so forth. In addition, the bill payment card 130 may be non-card-like, e.g., a key fob, miniature figure, and/or a communication device, etc.

In some embodiments of the invention, the bill payment card 130 may be available in multiple configurations allowing a user 125 to select his or her desired configuration. For example, the bill payment card 130 may be available in a standard credit card-sized card and/or a smaller keychain card and/or a key fob.

In some embodiments of the invention, the bill payment card 130 may include electronic and/or magnetic features, e.g., a microprocessor, memory, an electronic chip, a magnetic strip, a Universal Serial Bus (USB) flash drive, a wireless communication device, etc. For example, a bill payment card 130 may have the same or similar features to a credit or debit card, such as having a magnetic strip located on the back of the card, and thus may be compatible with standard credit card readers. The bill payment card 130 may also be configured the same or similar to a "smart card." Memory on the bill payment card 130 may be configured to store information related to a user, third party, processor, and/or past transactions, as well as other types of information related to the bill payment card 130. In some embodiments of the invention, the bill payment card 130 may be configured to communicate with a wired device, such as by USB, coaxial cable, etc., and/or a wireless device, such as by using Bluetooth^{®} and/or radio frequency identification (RFID) technology, etc.

The bill payment card 130 may have identification indicia, such as, by way of example only, alpha characters, numeric characters, alphanumeric characters, images, embossed numbers, a coded magnetic strip, an embedded electronic chip, bar codes, and/or other such identification indicia as known in the art. In some embodiments of the invention, there may be unique identification indicia for each bill payment card 130. Alternatively, some or all of the bill payment cards 130 may include the same identification indicia, or there may be a group of bill payment cards 130 with the same identification indicia within the group, but with a different indicia from other groups.

The identification indicia may be configured to associate the bill payment card 130 with a user 125, a third party 150, a processor 110, a retailer 160, and/or some other entity. The association may be accomplished by memory located remote of the bill payment card 130 or may be located on the bill payment card 130 itself. For example, information about the bill payment card 130 and/or the user may be stored in a remote database and/or may be embedded in a magnetic stripe on the bill payment card 130. In addition, the bill payment card 130 may be associated with a particular third party 150 using indicia that is visible on the card, such as, by way of example only, a biller-specific telephone number and/or trademark.

The bill payment card system 100 may be configured to have one and/or multiple users 125 for each bill payment card 130. In some embodiments of the invention, the bill payment card system 100 may be configured to be user independent, i.e., configured in such a way that anyone in possession of the card may use and have access to the available value on the bill payment card 130. In some embodiments of the invention, the bill payment card system 100 may be configured such that a single user or a limited number of users 125 may be authorized to use each bill payment card 130. For example, a user 125 purchasing a bill payment card 130 may be automatically authorized to use the bill payment card 130, and the user 125 may also select additional authorized users 125, who are then associated with the same bill payment card. Additional users 125 may be associated with a special bill payment card 130 by a processor 110 by adding additional user information to a record in a database 116. Alternatively, additional users may be associated on the bill payment card 130 itself, such as in memory located on the bill payment card 130.

A user 125 may utilize a bill payment card system 100 by communicating with a processor 110 over a communication network 140. The communication network 140 may be any type of network that allows a user 125 to communicate with a processor 110. The communication network 140 may be an electronic network, e.g., a public switched telephone network (PSTN), the Internet, an automated teller machine (ATM) network, any other type of public or private network, and/or any type of wireless network, and so forth. In some embodiments of the invention, the communication network 140 may be a non-electronic network, e.g., the postal service. The bill payment card system 100 may comprise multiple types of communication networks 140; for example, it may comprise both electronic and non-electronic networks.

As noted above, a user 125 may communicate over the communication network 140 using a communication device 120. The communication device 120 may be any device that enables such communication. For example, the communication device 120 may be a telephone, wireless or cellular telephone, computer, POS, Internet device, e-mail device, and/or text messaging device, etc. The communication device 120 may be located at a fixed location, such as a POS at a retail location, or may be mobile, such as a cellular telephone.

The bill payment card system 100 may be adapted for transferring value associated with the bill payment card 130 to a single third party or multiple third parties 150. In some embodiments of the invention, the bill payment card 130 may be pre-associated with a single third party 150. For example, the bill payment card 130 may include visible indicia on the face of the bill payment card 120 that indicates the associated third party 150, such as the third party's trademark. The bill payment card system 100 may also be adapted for transferring value to multiple third parties 150.

A third party 150 may include any person or entity that may receive value transferred from the bill payment card 130. For example, a third party 150 may be a biller to whom payment is owed. The third party 150 may also be a retailer or provider of goods and services from which the user wishes to make a purchase. The third party 150 may also be the user 125 himself or herself, which may allow the user 125 to disburse value from the bill payment card 130 to himself or herself. For example, a user 125 may associate a cash value with the bill payment card 130 and then designate himself or herself as the third party 150 in order to receive a cash disbursement from the bill payment card system 100.

A processor 110 may be configured to manage the bill payment card system 100. The processor 110 may include a microprocessor 114, memory 112, and a database 116 to perform some or all of the functions of the bill payment card system 100 electronically. The processor 110 may perform some or all of the functions of a bill payment card system 100, which may include, by way of example only: making a bill payment card 130 available to a user 125; activating a bill payment card 130; associating value with a bill payment card 130; associating and/or disassociating a third party or third parties 150 with a bill payment card 130; performing a transaction associated with a bill payment card 130; and/or transferring value to a third party 150 associated with a bill payment card 130.

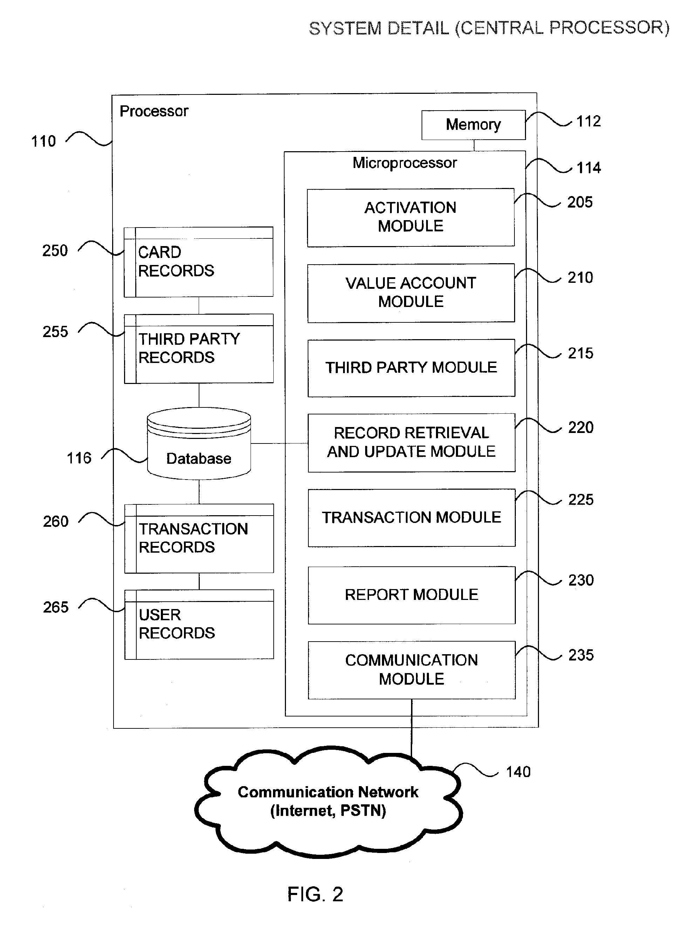

The processor 110 may also be configured to perform several functions during the step of performing a transaction associated with a bill payment card 130. Such transaction functions, which are described in more detail below in reference to Figs. 2-8, may include, but are not limited to: requesting and receiving a unique identifier associated with a bill payment card 130; creating and storing in a database a bill payment card record that includes a unique identifier associated with a bill payment card 130; requesting and receiving third party information; associating and disassociating third party information with a bill payment card 130; selecting a third party 150 to receive value from the bill payment card 130; associating a value account with a bill payment card 130; retrieving from a database third party information associated with a bill payment card 130; determining and providing an indication of a balance associated with a bill payment card 130; providing an indication of a low balance associated with a bill payment card 130; determining and providing an indication of an amount owed to a third party 150 associated with a bill payment card 130; requesting and receiving an indication of an amount of value to transfer to a third party 150; setting up and managing automatic, recurring payments for a user 125; requesting and receiving payment verification; initiating a transfer of value to a third party 150; transferring value from the bill payment card 130 to a third party 150; disbursing value from the bill payment card 130 to a user 125; updating records associated with a bill payment card 130, user 125, retailer 160, third party 150, and/or some other person, entity, or thing associated with a bill payment card system 100; issuing a transaction receipt; creating and distributing reports related to the bill payment card system 100; terminating a bill payment card 130; etc.

In some of the embodiments of the invention, a retailer 160 may perform none, one, or more of the functions of a bill payment card system 100. These functions may include those functions listed above regarding the processor 110. The retailer 160 may also perform other functions, e.g., selling a bill payment card 130 to a user 125; initiating a transaction and/or performing a transaction on behalf of a user 125; receiving value from a user 125; transferring value to an account associated with a bill payment card 130; providing a receipt to the user; etc.

For example, the retailer 160 may be configured to make a bill payment card 130 available to a user 125, such as through an off-the-shelf purchase or by the user 125 operating a self-service kiosk or machine. The retailer 160 may be configured to receive bill payment cards 130 from a processor 110 and/or a third party 150 and to communicate with the processor 130 and/or a third party 150 before, during, and/or after a bill payment card purchase.

When a user 125 purchases a bill payment card 130, the retailer 160 may be configured to initiate a transaction on behalf of the user 125, associate one-third or more parties 150 with the bill payment card 130, and/or add value to the bill payment card 130. In addition, a retailer 160 may also be configured to perform subsequent transactions on behalf of a user 125. Subsequent transactions may include receiving value (e.g., cash) from a user 125 to add to a bill payment card 130, and providing value to a third party 150. A retailer 160 may communicate with the processor 110, the third party 150, and/or other entity associated with the bill payment card system 100 to perform the transactions or functions related to a bill payment card system 100. The retailer may communicate with the processor 110 via a communication device 120.

The processor 110 and/or third party 150 may be configured to receive a communication from the retailer 160 before, during, and/or after a sale of a bill payment card 130 to a user 125. The processor 110 and/or third party 150 may also receive communications from the retailer 160 regarding any subsequent transactions performed by the user 125 at the retailer 160. During a sales transaction, the retailer 160 may communicate with the processor 110, transmitting information about a user 125 and the sale, and receiving information and/or authorization about the bill payment card 130 and any other associated information, e.g., biller information. Alternatively, the retailer 160 may be configured to perform the sales transaction with the user 125, and subsequently communicate with the processor 110 and/or third party 150. None, some, or all of the transactions performed by the retailer may be performed in this "offline" manner, where communication between the retailer 160, the processor 110 and/or third party 150 takes place at a time subsequent to a purchase or transaction.

With reference to Fig. 2, the processor 110 will now be discussed. The processor 110 may comprise a microprocessor 114, memory 112, and a database 116. The processor 110 may include several modules that are configured to perform some or all of the functions of managing a bill payment card system 100, including an activation module 205, a value account module 210, a third party module 215, a record module 220, a transaction module 225, a report module 230, and a communication module 235.

The processor 110 may include a communication module 235 to communicate with users, retailers, third parties, and/or financial institutions. The communication module 235 may be configured to communicate via one or more networks, e.g., a PSTN, the Internet, an ATM network, and/or any type of wireless network. For example, a communication module 235 may be configured such that a user 125 may call the processor 110 by telephone to perform a transaction using the telephone's keypad and/or using voice recognition.

In some embodiments of the invention, the communication module 235 may be configured such that a user 125 may communicate with the processor 110 to perform a transaction over the Internet, e.g., using a web browser, e-mail, text messaging, short messaging service (SMS), and/or instant messaging. For example, a communication module 235 may be configured such that the user 125 may perform a transaction using a bill payment card 130 by visiting an Internet website. The communication module 235 may be configured to receive information from the user 125, such as a payment amount and/or third party information, and to transmit information to the user 125, such as fund balance information, low balance information, a receipt, and/or a transaction history. In some embodiments of the invention, the communication module 235 may be configured to communicate via any type of mail or postal service.

The processor 110 may also be configured to include a database 116 to store records and information related to a bill payment card system 100, e.g., bill payment card records 250, third party records 255, transaction records 260, and/or user records 265. The database 116 may include any type of record that may be associated with a bill payment card 130, for example, bill payment card records 250, third party records 255, transaction records 260, and/or user records 265. The modules and records in Fig. 2 are for illustrative purposes only, and thus, additional or fewer modules and records, and other configurations are contemplated by the present invention to carry out the methods and systems described herein.

Each record in the database may comprise any information related to the bill payment card system 100, e.g., a unique identifier (bill payment card number, password, etc.), user information (e.g., name, address, user number, authorized user list, third party account information, bank account information, etc.), third party information (e.g., name, address, telephone number, customer account information, bank account information, etc.), retailer information (e.g., name, address, retailer number, etc.), and transaction history (e.g., for user, retailer, and/or biller, etc.). For example, in some embodiments of the invention, the processor 110 may be configured to associate bill payment cards 130 and/or users 125 of the bill payment cards 130 with a third party or third parties 150 by creating a record that includes a unique identifier located on a bill payment card 130 along with the user's name and address and third party account information.

The processor 110 may further comprise an activation module 205 configured to perform the function of activating a bill payment card 130. The activation module 205 may be configured to request and receive a unique identifier associated with the bill payment card 130. The activation module 205 may also be configured to create and store a bill payment card record 250 associated with the unique identifier. The bill payment card record 250 may be modified in any fashion to indicate activation of the bill payment card 130. Alternatively, creation of the bill payment card record 250 by itself may indicate activation of the bill payment card 130, without any further modification.

The processor 110 may further comprise a value account module 210, configured to manage a value account associated with a bill payment card 130. The value account module 210 may be configured to transfer value from a user to an account, or from an account to a user or a third party. For example, the value account module 210 may communicate with a bank 170 to transfer funds into or remove funds from a financial account. In some embodiments of the invention, the processor 110 may locate value associated with the bill payment card 130 in an account, until the user 125 initiates a transfer of payment, after which, the value account module 210 may direct a transfer of an amount of value indicated by the user 125 from the account to a third party 150. The value may be transferred in any fashion, such as, by way of example only, wire transfer, electronic transfer, mail or courier, etc. The processor 110 may transfer the value to a third party 150 immediately or may transfer the value periodically, such as monthly. The processor 110 may also collect multiple payments of value from multiple users 125 throughout a specified period and make a single payment to the third party 150 at the end of the specified period.

The processor 110 may further comprise a third party module 215 configured to perform functions related to third parties 150 that are associated with the bill payment card system 100. For example, the third party module 215 may be configured to request and receive third party information, which the third party module 215 may associate with a bill payment card 130. The third party module 215 may perform other functions, including registering third parties 150 with the bill payment card system 100 and managing third party information, e.g., customer account numbers, balance information related to customer accounts, payment due dates, etc.

The processor 110 may further comprise a record module 220, that may be configured to store, modify, and retrieve records from the database 116. The record module 220 may be configured to store any type of information related to the bill payment card system 100, e.g., user information, third-party information, card information, transaction information, retailer information, etc. The record module 220 may access and modify records in the database 116 in real-time during each transaction or in an offline mode, where the database is updated subsequent to each transaction.

A transaction module 225 configured to manage any or all aspects of transactions involving a bill payment card system 100 may also be included in the processor 110. Transaction related functions may include, but are not limited to, requesting and receiving a unique identifier, retrieving a bill payment card record associated with a unique identifier, requesting and receiving a third party selection, determining an amount owed to a third party 150, sending an indication of a balance associated with a bill payment card 130, requesting and receiving an amount to pay, requesting and receiving payment verification, initiating a transfer of value to a third party 150, creating and updating records 250, 255, 260, 265, issuing a receipt, and requesting and receiving an indication of whether a user chooses to perform an additional transaction.

The transaction module 225 may be configured to also authorize use of a bill payment card 225. In some embodiments of the invention, the processor 110 may store a password, or some user-specified code word and/or number, which the processor 110 may compare to a password and/or code entered by a user 125 when initiating a transaction. The password may be some or all of a unique identifier associated with a bill payment card 130.

The processor 110 may comprise a report module 230 that is configured to produce reports based on information related to a bill card payment system 100. These reports may be accessed on demand, such as by using the Internet and/or telephone, or the reports may be distributed on a periodic basis, such as by mail or postal service and/or by e-mail. The report module 230 may be configured to issue reports to users 125, retailers 160, third parties 150, and/or other entities related to the bill payment card system 100. For example, the processor 110 may issue a quarterly report to each third party 150 associated with the bill payment card system 100. In another example, the processor 110 may issue monthly reports to users 125 of the bill payment card system 100. The processor 110 may also be configured to issue a report, confirmation, receipt, etc. after each use of the bill payment card system 100. For example, the processor 110 may be configured to e-mail a confirmation after each transaction involving a bill payment card system 100. The frequency and content of these reports may be selected by the entity receiving the report. For example, a user 125 may select to receive monthly reports in the mail, quarterly reports by e-mail, receipts via e-mail immediately after each transfer, and/or some combination of reports, such as an immediate receipt via e-mail and a monthly report in the mail.

The processor 110 may or may not also be a third party 150 or a component of a third party system. For example, a user 125 may obtain a bill payment card 130 from a third party 150. The user 125 may later communicate with the third party 150 in order to transfer value from the bill payment card 130 to the third party 150.

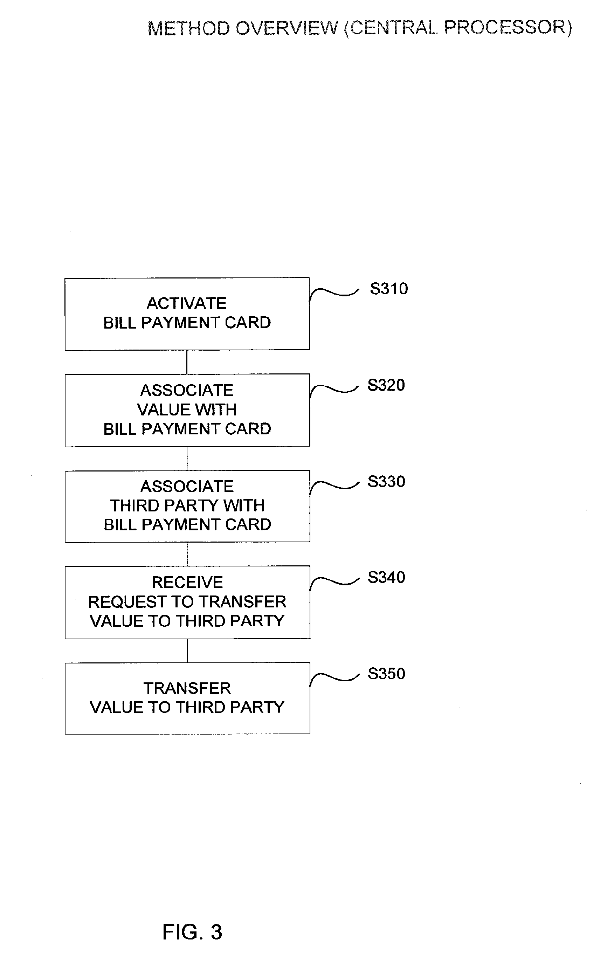

With reference to Fig. 3, a method for managing a bill payment card system in accordance with some embodiments of the invention will now be discussed. In step S310, a processor may activate a bill payment card. The bill payment card may be activated upon purchase, or may be activated prior to or after being purchased. For example, the customer may purchase an unactivated bill payment card at a retail location, and subsequently activate the bill payment card by calling a toll-free number and entering information sufficient to verify the particular bill payment card and to verify the caller has authorization to activate the bill payment card, e.g., entering a PIN number.

In step S320, the processor may associate value with a bill payment card. The value may be associated when the bill payment card is activated or may be associated subsequent to the bill payment card being activated. In some embodiments of the invention, a customer may purchase a bill payment card at a retail location using money value, and some or all of the purchase money value may be associated with the bill payment card. The association of value with a bill payment card may take any form; for example, the association may be performed by modifying a record in a database, wherein the record is associated with a bill payment card. The value may also be transferred to an account associated with the bill payment card, or the bill payment card may be associated with a unique identifier that a database record and/or bill payment card account is associated.

In step S330, the processor may associate a third party with the bill payment card. The third party may be a biller that a bill pay card user owes money, or may be a particular provider of goods and/or services with whom the bill payment card user foresees a future relationship. The processor may modify a database record that is associated with the bill payment card, so that the record includes information sufficient to identify the third party. The processor may associate a single third party or multiple third parties with a bill payment card. In some embodiments of the invention, the processor may determine which third party or third parties to associate with the bill payment card. Alternatively, a bill payment card user may determine which third party or third parties to associate with a bill payment card. Additionally, the information sufficient to identify the third party may include customer account information of a bill payment card user. For example, a bill payment card user may enter an account number, which the processor may recognize as an account number with a particular provider.

In step S340, a processor may receive a request to transfer value to a third party. The request may take any form of communication, such as, by way of example only, telephone, e-mail, fax, text message, SMS, Internet, wireless, RFID, etc. The processor may receive the request directly from a bill payment card user, or the processor may receive the request through an intermediary, such as a retailer. The third party may be a party other than the bill payment card user allowing the bill payment card user to direct a payment of value to another party, or may be the bill payment card user himself or herself, allowing a disbursement of value to the bill payment card user. The request to transfer value may include an indication of the amount of value to transfer, which may be the amount due or some other amount up to the amount available on the bill payment card.

In step S350, a processor may transfer the value to the third party. In some embodiments of the invention, the processor may only initiate the transfer of value, directing another entity to perform the transfer, or the processor may transfer the value directly. The transfer of value may take any form, such as by electronically transferring the value, e.g., through the Automated Clearing House (ACH) Network or by other means, or by mailing the value, e.g., in the form of a check.

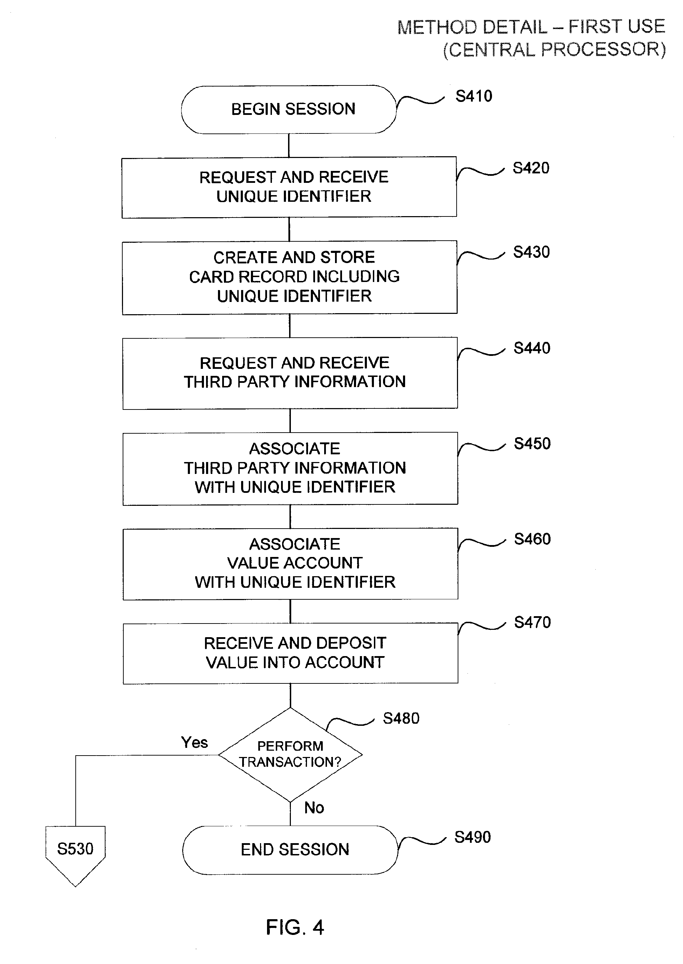

With reference to Fig. 4, a method for managing an initial use of a bill payment card in a bill payment card system for transferring value to one or more third parties using a bill payment card in accordance with some embodiments of the invention will now be discussed. An initial use of a bill payment card may generally comprise activating a bill payment card, associating value with the bill payment card, associating a third party with the bill payment card, and/or performing a transaction using the bill payment card.

In step S410, a processor may begin a session upon receiving a communication from a bill payment card user or an intermediary, e.g., a retailer. Such a communication may be in various forms, and its form may depend on the party initiating the communication. For example, the communication may be received from a retailer from a POS system over a network, or the communication may be received from a bill payment card user over a telephone. Other forms of communication are also contemplated such as text messaging, SMS, ATM network, RFID, etc.

In step S420, a processor may request and receive a transmission of a unique identifier associated with a bill payment card. The unique identifier may be a number visible on the face of a bill payment card or some other form of indicia associated with a bill payment card. The transmission may include a unique identifier or may include information sufficient to determine the unique identifier.

In step S430, a processor may create a bill payment card record associated with the unique identifier, and may store the bill payment card record in a database. The bill payment card record may be created and stored before, during, or after an initial use of a bill payment card. For example, a bill payment card record may be created and stored prior to distribution of a bill payment card to the retailer or sale to a user, prior to activation of a bill payment card, and/or during the purchase of a bill payment card. Association with a unique identifier may occur by modifying the bill payment card record to include the unique identifier or by some other modification of the bill payment card record sufficient to associate it with the unique identifier.

In step S440, the processor may request and receive third party information that may comprise any information sufficient to identify the third party. In some embodiments of the invention, third party information may include a customer account number, a name, an address, and/or a telephone number of the third party. Third party information may also comprise information related to a bill payment card user that may be verified with a third party, e.g., a bill payment card user's telephone number or address that is on record with the third party.

In step S450, a processor may associate a third party with the unique identifier of the bill payment card. The processor may modify the bill payment card record to include information sufficient to identify a third party. For example, the bill payment card record may be modified to include a customer's account number with the third party.

In step S460, the processor may associate an account with the unique identifier. The account may be able to receive and hold some type of value (e.g., money, credits, etc.) therein. For example, the processor may associate the unique identifier with a bank account, which is able to receive funds associated with the bill payment card.

In step S470, the processor may receive and deposit value into an account associated with a bill payment card. For example, a user may purchase a bill payment card, and the processor may subsequently receive the purchase amount and deposit some or all of the purchase amount into a financial account associated with the bill payment card.

In step S480, the processor may query the user to determine whether the user wishes to perform a transaction with the bill payment card. If the user chooses not to perform a transaction, the processor may end the session, in step S490. If the user chooses to perform a transaction, the processor may then begin a transaction, in step S530.

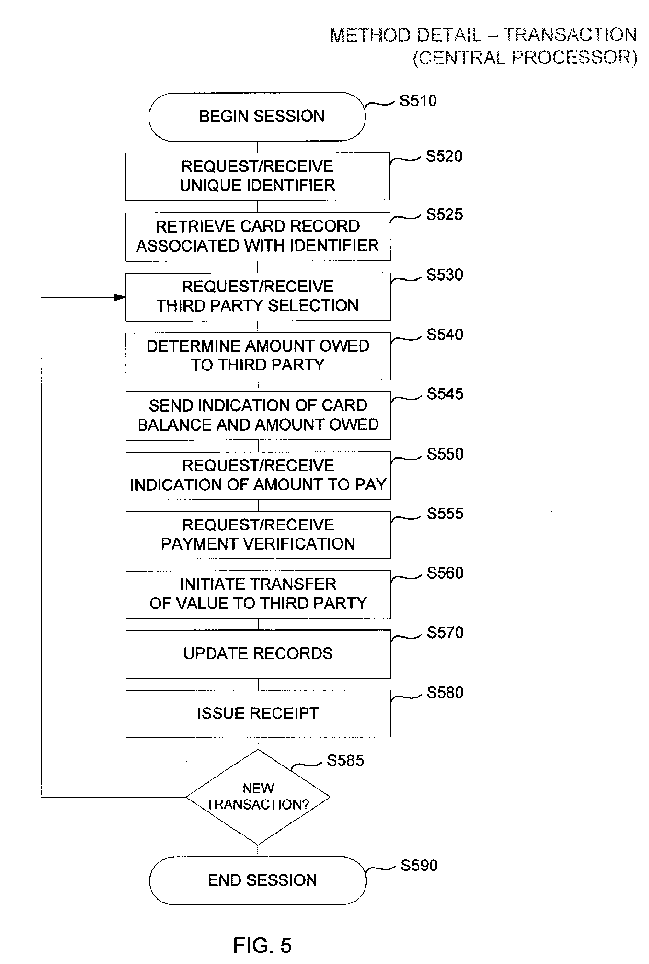

A method for managing a transaction involving a bill payment card system for transferring value to one or more third parties using a bill payment card in accordance with some embodiments of the invention will now be discussed, and is illustrated in Fig. 5.

In steps S510 and S520, similarly to the aforementioned steps S410 and S420 described above, the processor may begin a session and request and receive a unique identifier associated with a bill payment card. In step S525, the processor may retrieve from a database a bill payment card record associated with a unique identifier. The processor may retrieve some or all of the data located in the bill payment card record, e.g., a list of third parties associated with the bill payment card.

In step S530, the processor may request and may receive from a user a selection of which third party to associate with the transaction, i.e., which third party to transfer value to. For example, during a telephone transaction, the processor may communicate to the user a list of third parties, and the user may be able to press a digit to select the desired third party. The processor may then upon receiving the user's selection, the processor may determine the selected third party based on the selection. In some embodiments of the invention, step S530 may be skipped, such as where there is only one third party associated with a bill payment card.

In optional step S540, the processor may determine an amount owed to a third party. For example, in some embodiments of the invention, the processor may manage a payment by a customer to a biller that has billed the user for services rendered. In such an example, there may be a particular amount due to the biller, which the processor may determine. The processor may determine an amount owed by communicating with the third party and/or with the bill payment card user. The communication may occur during the transaction, or it may occur before or after the transaction takes place.

In step S545, the processor may send an indication of a balance associated with the bill payment card and may send an indication of an amount owed to the third party. The balance may include a dollar amount available associated with the bill payment card, or the card balance may include some other measure of value, (e.g., credits) available. In some embodiments of the invention, the processor may warn the user when the card balance is less than the amount owed.

In step S550, the processor may request and may receive from a user an indication of an amount of value to transfer to a third party. In some embodiments of the invention, the processor may give the user the option to indicate to the processor that the user desires to pay the amount due. For example, the processor may give the user the option to press "1" on a telephone keypad in order to pay the amount due.

In optional step S555, the processor may request and may receive a payment verification. The payment verification may comprise presenting to the user a summary of the transaction, e.g., the name of the third party and the amount of value that will be transferred. A payment verification may also include requesting the user to verify that the information is correct and that the transfer of value is still desired.

In step S560, the processor may initiate a transfer of value to a third party, e.g., making value associated with the bill payment card unavailable to a user, modifying a record associated with the bill payment card, requesting a bank to transfer value, etc. Initiating a transfer may or may not include actually transferring value to a third party. For example, the transfer of value may be performed by an entity separate from the processor, or the transfer of value may occur at a time subsequent to the transaction.

In step S570, the processor may update records associated with the bill payment card transaction. For example, the processor may create and store a transaction record that includes any type of information related to the transaction. In another example, the processor may modify an existing record, e.g., a bill payment card record, third party record, user record, etc., to include any type of information related to the transaction. Information related to the transaction may include the third party to whom value was transferred to, how much value was transferred, the time and place of the transaction, etc.

In step S580, the processor may issue a receipt to the user. The receipt may be issued in any form, e.g., a printed paper receipt, an e-mail, a receipt indicated on a webpage that may be printed by the user, and/or a postal letter. The receipt may include any type of information related to the transaction and/or additional information related to the bill payment card, e.g., card balance information.

In step S585, similarly to step S480, the processor may give the user the option to perform an additional transaction during the session. If the user chooses to perform an additional transaction, some or all of the transaction steps may be repeated, for example starting at step S530. If the user chooses to end the session, then the processor may end the session in step S590.

Additional steps may be included in managing a transaction that are not illustrated in Fig. 5, as described elsewhere herein. A processor may perform one, some, or all of the steps illustrated in Fig. 4 during a transaction, e.g., adding or removing third parties from being associated with a bill payment card, associating value (or additional value) with a bill payment card, receiving and depositing value into an account associated with a bill payment card, etc.

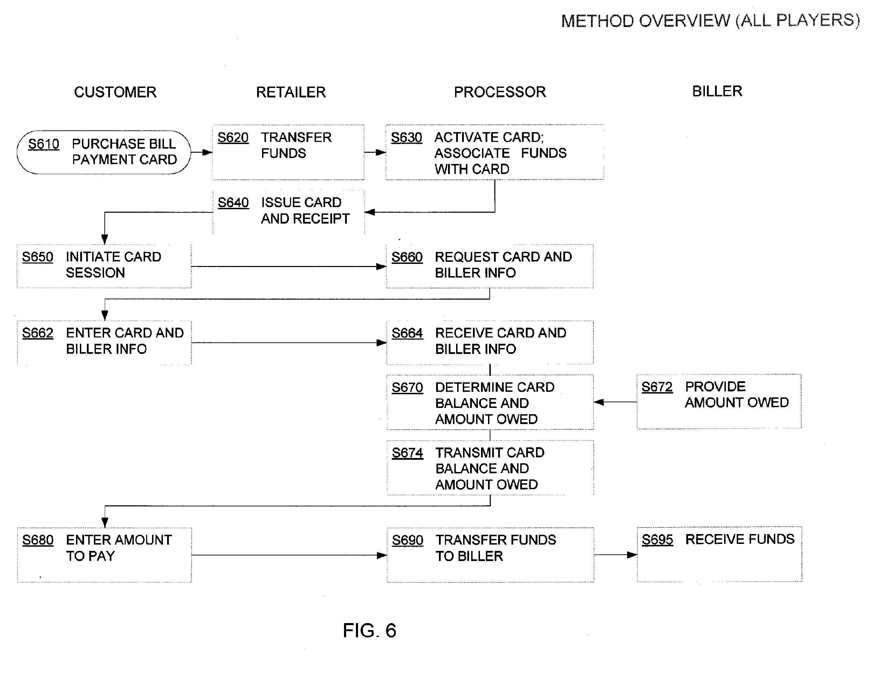

Figs. 6-8 are flowcharts illustrating various embodiments of the invention. For illustrative purposes only, Figs. 6-8 exemplify methods for a user to purchase a bill payment card from a retailer in order and make a money payment to a biller using the bill payment card. The present invention contemplates embodiments beyond those illustrated in Figs. 6-8, for example, where the third party is not a biller and where the value transferred to the biller is not a money payment, but rather some other form of value.

Fig. 6 illustrates a method for making payments to one or more billers by a user of a bill payment card purchased from a retailer in accordance with some embodiments of the invention.

In step S610, a user may purchase a bill payment card at a retailer. In step S620, the retailer may receive value from the user and transfer some or all of the value to a processor. Instead of, or in addition to, transferring value, the retailer may send information about the transaction, e.g., user information and card information, to a biller. Additionally, value may be transferred by the retailer at a later time subsequent to the transaction occurring. In step 630, the processor may receive the value, activate the bill payment card, and associate the value with the bill payment card. For example, the processor may associate an account with the bill payment card during the activation process, and then deposit the value into the account. In step 640, the retailer may provide an activated bill payment card to a user, along with a receipt. The receipt may indicate the amount of value available for use.

In step 650, the user may initiate a session for using the bill payment card, for example, by dialing a toll-free telephone number or by interacting with a retailer. In step 660, the processor may begin a session with the user, requesting the user to enter card and biller information. For example, the processor may ask the user to enter a unique identifier associated with the card, such as a card number and/or password. In addition, the processor may provide a list of billers associated with the card, from which the user may select the biller to receive the transferred funds. In step 662, the user may enter the card and biller information, which the processor may receive in step 664.

In step 670, the processor may determine the balance of value available that is associated with a bill payment card, and may determine an amount to provide to a selected biller. The processor may determine the available balance by retrieving a database record that is associated with the bill payment card. In step S672, a biller may provide an indication of an amount owed by the user. The biller may provide such an indication in real-time during the transaction, for example, by communicating with the processor via the Internet or other network. Alternatively, the biller may provide such an indication before the transaction takes place. In step S674, an indication of the balance associated with the bill payment card and an indication of an amount owed to a biller is transmitted to the user. In some embodiments of the invention, the steps of determining and transmitting an amount owed and the biller providing an amount owed may be omitted.

In step S680, the user may enter an amount of value to transfer to a biller. In some embodiments of the invention, the processor may ask the user to make a selection in order to automatically pay the amount due to a biller. The user may also enter a specific amount to pay that is equal to, greater than, or less than an amount due. The processor may request verification of the amount entered by the user; for example, it may repeat the amount entered, and ask the user to verify the payment.

In step S690, the processor may transfer an amount of value requested by the user to a biller. The processor may initiate the transfer, directing another entity, such as a bank, to perform the actual transfer of value, or the processor may perform the actual transfer of value itself. The transfer of value may occur during or immediately after a transaction takes place. Alternatively, the transfer of value may occur sometime after the transaction takes place, for example, the transfers may be made periodically, e.g., daily or weekly, in batch form. In step 695, the biller may receive the value.

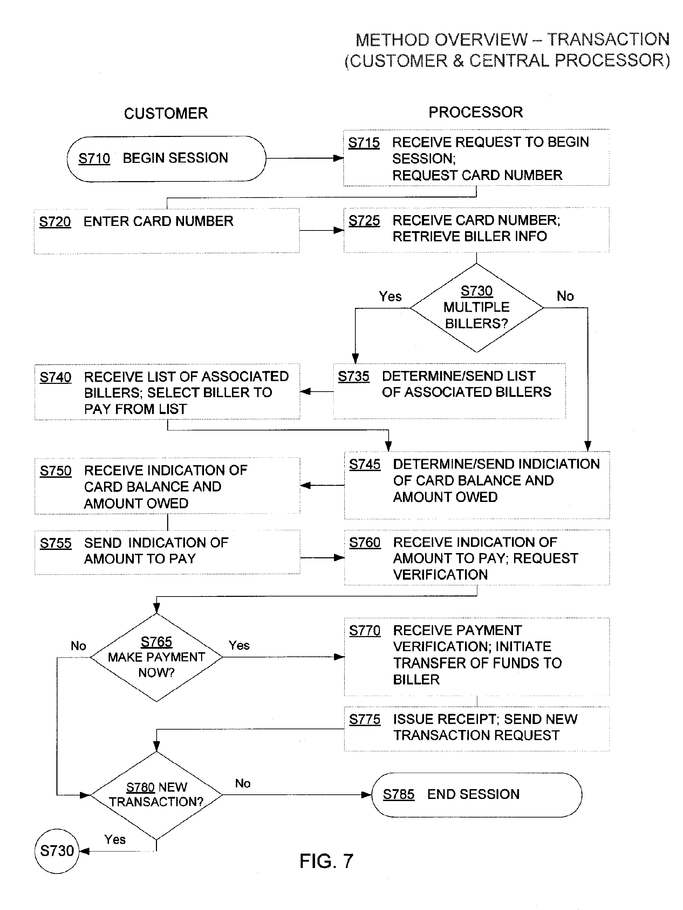

With reference to Fig. 7, a method for performing a transaction involving a bill payment card system in accordance with some embodiments of the invention will now be discussed.

In step S710, a user may begin a session using a bill payment card. For example, the user may dial a toll-free telephone number, send an instant message, and/or visit a particular website. In step S715, the processor may receive a request to begin a session from the user, and may respond by requesting a unique identifier associated with a bill payment card, e.g., a card number and/or password. In steps S720 and S725, the user may enter and the processor may receive, respectively, the unique identifier associated with the bill payment card. In step S725, the processor may also retrieve biller information associated with the bill payment card. The biller information may include a list of billers associated with the bill payment card.

In step S730, the processor may determine whether multiple billers are associated with the bill payment card, and if so, then the processor may send a list of associated billers to a customer at step S735. In step S740, the user may receive the list of billers and may select a particular biller to receive a transfer of value. For example, in a telephone transaction the processor may list the billers and the user may be instructed to select the desired biller.

In step S745, the processor may determine a balance associated with a bill payment card and an amount owed to a selected biller and send an indication of this information to the user. The processor may instruct the user to press a single digit on a telephone keypad in order to pay the amount owed to a biller, or the user may be instructed to enter a specific amount of value to transfer to the selected biller. In step S750, the user may receive an indication of the balance of funds associated with the bill payment card, an amount owed to a particular biller and may request instruction to proceed. In step S755, the user may send an indication to proceed, which may comprise of an amount of value to transfer.

In step S760, the processor may receive an indication of an amount to pay and may optionally request verification of such amount. For example, the processor may present to the user a selected amount to pay in order to verify that it is the correct amount, and that the user still wishes to proceed with the transaction. In step S765, the user may verify the transfer, either choosing to authorize the transaction or cancel the transaction.

In step S770, the processor may receive verification of the transfer and may initiate the transfer of value to a biller. the processor may initiate a transfer of value in several ways, e.g., making the value unavailable to the customer, modifying records associated with the bill payment card, and/or transferring the value from an account associated with the bill payment card.

In step S775, the processor may issue a receipt to the user indicating the substance of the transaction, and may ask the user whether the user wishes to perform an additional transaction. In step S780, the user may select whether or not to perform an additional transaction, such as by pressing one button on a telephone keypad for "yes" or another button on the telephone keypad for "no," or by speaking the words into a telephone. If the user chooses to perform an additional transaction, then the transaction process may repeat itself, for example, starting at step S730. In step S785, the processor may end a session.

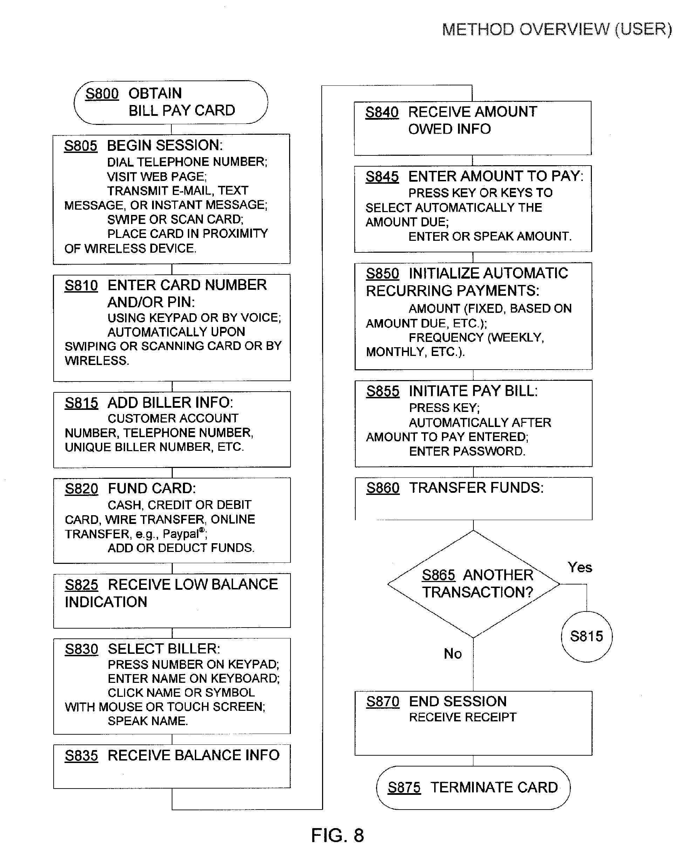

With reference to Fig. 8, a method for making payments to a biller using a bill payment card system in accordance with some embodiments of the invention will now be discussed.

In step S800, a user may obtain a bill payment card. The user may obtain the bill payment card in any fashion, such as at a retail location, through the mail from a biller, or by ordering the card by mail, telephone, or the Internet.

In step S805, the user may begin using the card by initiating a session. In some embodiments of the invention, the user may dial a toll-free number associated with the card. Alternatively, the user may also begin a session in a number of other ways, such as by interacting with a store clerk at a retail location and/or by using a self-service POS or kiosk, computer, text-messaging system, instant-messaging system, or a wireless device. For example, a bill payment card with a magnetic strip may be swiped, or a bill payment card with visual indicia, e.g., a bar code, may be scanned. The bill payment card may also be enabled by a wireless technology, such as Bluetooth^{®} and/or RFID, and the user may begin a session by placing the bill payment card in communication with another wireless device.

In step S810, the user may provide to a processor a unique indicia associated with the bill payment card, e.g., a card number. The unique indicia may comprise alpha characters, numeric characters, alphanumeric characters, and/or other types of symbols. In some embodiments of the invention, after initiating a transaction by dialing a toll-free number, the user may provide the unique indicia by pressing the numbers on the telephone keypad and/or speaking the numbers into the telephone. Alternatively, the bill payment card may be presented to a store clerk, and the store clerk may provide the unique indicia to the processor. Where the user initiates the transaction by scanning and/or swiping the bill payment card, or by using a wireless-enabled bill payment card, the unique indicia may be entered or transmitted automatically after the user begins the session, without requiring further input. The user may also enter the unique indicia using a keyboard and/or keypad by using the Internet via a computer, cellular telephone, text messaging system, SMS, and/or instant messaging system.

In step S815, biller information may be associated with the bill payment card. This association may allow the user to select a biller that may receive a payment made by the user using the bill payment card. The biller information may be associated with the bill payment card before, during, and/or after the user obtains the bill payment card. In some embodiments of the invention, the bill payment card may be associated with one or more billers prior to the user obtaining the bill payment card, such that the user purchases the bill payment card for the purpose of making current and/or future payments to the biller or billers already associated with the bill payment card. Further, there may be indicia on the bill payment card telling the user when purchasing the bill payment card which billers are associated with the bill payment card. For example, the bill payment card may be branded with a trademark or logo of a particular provider of goods or services, thereby indicating to the user that the bill payment card may be used to pay that particular provider of goods or services.

In some embodiments of the invention, the user may be able to add and remove billers associated with the bill payment card during and/or after obtaining the bill payment card. There may be a number of ways by which the user could add and remove billers. In some embodiments of the invention, such as where the user for the first time has initiated a transaction by dialing a toll-free number and entering the unique indicia, the user may be prompted to and may enter the billing information, which may include an account number and/or a telephone number. In addition, the user may add and/or remove billers by using a POS terminal or a self-service kiosk and/or by making a request to a store clerk, who in turn operates a POS terminal. The user may also add and remove billers using the Internet, or some other form of communication, with a processor.

In step S820, value may be added to the bill payment card. The value may be loaded on the bill payment card at a retail location when a user purchases the bill payment card, and/or may be added at time subsequent to obtaining or purchasing the bill payment card, such as by returning to the retail location and/or by using a self-service kiosk, a telephone, or the Internet. The value may be loaded manually or automatically. The user may load the value manually, for example, by inserting or swiping the bill payment card at a POS terminal and then providing payment, such as by using a bill reader or a deposit envelope, the value of which is then loaded on the bill payment card or transferred into an account associated with the bill payment card. In addition, the user may load the value automatically by associating the bill payment card with a checking and/or savings account, where value may be transferred anytime by request of the user from the checking or savings account to the bill payment card or an account associated with the bill payment card. The loading of value may also be fully automatic whereby a certain amount of value is transferred periodically-daily, weekly, monthly, or some other period of time-from the user's account to the account associated with the bill payment card.

In optional step S825, the user may be notified when the bill payment card and/or an account associated with the bill payment card reaches a low balance, which may be set at a predetermined amount by a processor and/or by the user. The notification may occur by telephone, postal mail, e-mail, text message, SMS, instant message, etc. The notification may also occur in response to the use of the bill payment card, such as, by way of example only, on a receipt.

In step S830, if more than one biller is associated with the bill payment card, the user may select the particular biller to which the user desires to make a payment. In some embodiments of the invention, such as when the user uses a telephone or other keypad-enabled device to initiate the transaction, the user may be verbally given a list of billers along with a corresponding number or numbers to press to select a particular biller. Alternatively, instead of being given a list of billers, the user may be prompted and may enter a biller number, account number, telephone number, and/or password that identifies the selected biller. When using a device capable of visual display, such as a computer connected to the Internet, a POS terminal, or a cellular telephone, the user may select the biller, or click on an icon or symbol representing the biller, from a list of the current billers associated with the bill payment card.

In step S835, the user may receive information regarding the amount of the value available on the bill payment card and/or an account associated with the bill payment card. In some embodiments of the invention, the system may automatically provide the user with a balance available when the user initiates a transaction, selects a biller, and/or completes a transaction. For example, the balance may be provided in the form of a receipt. Alternatively, the user may manually request the balance available after initiating a transaction, such as by using a keypad, a pointing device on a computer or POS, and/or touch screen, etc., or verbally requesting a receipt.

In step S840, the amount owed to the biller may be communicated to the user. In some embodiments of the invention, the amount due to the selected biller may be automatically communicated to the user after communicating the amount of value available to the user and/or after the user selects the biller. If the user is performing the transaction with a visual display device, such as a computer, POS, kiosk, and/or cellular phone, the visual display device may display the biller's name, the amount due to the biller, and/or a list of the billers' names and the amount due to each biller. The information regarding the amount due, the balance of value available, and/or the total amount due all billers may be communicated simultaneously to the user. This may allow the user to view the balance available, a list of the billers' names, the amount due to each biller, and/or the total amount due on one screen.

In step S845, the user may enter the amount to provide to the selected biller. In some embodiments of the invention, the user may press a single button in order to select an amount to provide to the biller equal to the amount due. For example, after the user receives information regarding the amount of value available and the amount due to the biller, the user may be instructed to press a button, such as the "1" button on a keypad, to provide the amount due. The user may also be given the option to enter a specific amount, i.e., an amount above, below, or equal to the amount due. In such a case, the user may enter the specific amount using a keypad device and/or speaking into an input device, such as a telephone.

In optional step S850, in addition to having the option to make a single payment, the user may be given the option of setting up automatic recurring payments to the biller or billers. In some embodiments of the invention, the user may choose to have a fixed amount transferred the same day each month from the value located on the bill payment card or in an account associated with the bill payment card to a processor or the biller. Where the bill payment card is associated with multiple billers, the user may select different automatic payment terms-amount, frequency, date, etc., of each payment-for each biller. In addition, the user may make automatic recurring payments to some billers while making manual payments to other billers.

In step S855, the payment to the biller may be initiated. In some embodiments of the invention, the biller name, amount due, and amount selected to pay may be communicated to the user, who may then be instructed to verify and initiate the payment. The user may verify the payment through any means, for example, pressing a number or series of numbers on a keypad or selecting a button on the screen. Additionally, the verification may require the user to enter a password to initiate payment. Alternatively, such as where the user selects to pay the amount due, the payment may be initiated automatically, without verification, after the user selects to pay the amount due, such as by pressing a single digit on a telephone key pad, and/or enters the amount to pay.

In step S860, value may be transferred from the bill payment card or an account associated with the bill payment card to the biller. In some embodiments of the invention, the value may be immediately transferred some time after the user enters payment verification. Alternatively, value may be made immediately unavailable to the bill payment card holder, but then transferred at a later time to the biller. The value may be transferred to the biller directly and/or through a processor. For example, a processor may transfer value from multiple users to a biller in a single monthly transaction.

Available value may also be disbursed from the bill payment card or an account associated with the bill payment card to the bill payment card user. Available value may be value that has been loaded onto the bill payment card or an account associated with the bill payment card, but has not yet been made unavailable, such as by initiating the transfer of such value to a biller. Value may be removed in a similar manner to the method of adding value.

In step S865, the user may choose to perform another transaction or end the transaction. In some embodiments of the invention, after initiating the payment to a biller, the user may be instructed to press a button or to say "Yes" to make another payment to the same and/or different biller.

In step S870, after completing a transaction and/or after completing a session where the user completes multiple transactions, a receipt may be displayed or issued to the user. In addition, the user may receive a receipt in the mail or via some other communication, such as telephone, e-mail, text-messaging system, and/or instant-messaging system. In some embodiments of the invention, a statement summarizing transactions associated with the bill payment card for a given period may be sent to the user on a periodic basis, e.g., monthly, quarterly, and/or yearly. For example, the user may receive a receipt immediately after a transaction via e-mail and then later receive a periodic statement that summarizes multiple transactions during the period.

In step S875, use of the bill payment card may be terminated. Termination may occur in a number of ways, including, but not limited to, deactivation and/or expiration of the bill payment card.

Various other embodiments may be had without departing from the present invention. For example, systems in methods in which bill pay cards are preassociated with a particular biller or provider are contemplated. Such preassociated cards may be purchased or may be provided to customers by the particular biller or provider. A user of such a preassociated card may accordingly transfer funds to the particular biller or provider through the use of an intermediary. This intermediary may be contacted via telephone, the internet, or other network system. It is contemplated that a user of such preassociated bill pay cards may provide the bill pay card and payment to a third party merchant, who may contact a central processor and provide information encoded on the bill pay card to the central processor. The user may inform the central processor, via the third party merchant, of the amount he or she wishes to pay the biller or provider. The central processor may contact the third party merchant and insert the value selected by the user into the user's account. Contact between the central processor and the biller or provider may occur in real-time, or may occur periodically, i.e., in batch transfers. The third party merchant may receive payment from the user, and the central processor and the third party merchant may settle via ACH or other such payment systems.

It will be apparent to those skilled in the art that various modifications and variations can be made in the method, manufacture, configuration, and/or use of the present invention without departing from the scope or spirit of the invention.

## Claims

1. A method of managing a payment system comprising:
activating a payment card;
associating a value with the payment card;
associating a third party with the bill payment card;
receiving an identifier associated with the payment card;
determining an amount of value associated with the payment card;
providing an indication of the amount of value associated with the bill payment card to the payment card user;
receiving a request from a bill payment card user to transfer at least some of the value to the third party; and
initiating a transfer of the at least some of the value to the third party.

2. The method of managing a payment card system according to claim 1, further comprising:
transferring at least some of the value to the third party.

3. The method of managing a payment card system according to claim 1, wherein the step of activating the bill payment card comprises:
receiving an identifier associated with the payment card;
creating a payment card record and storing the payment card record in a database, wherein the payment card record comprises information sufficient to identify the identifier; and
associating a value account with the unique identifier.

4. The method of managing a payment card system according to claim 1, wherein the step of associating value with the payment card comprises:
receiving value;
receiving an identifier associated with the payment card;
identifying a value account associated with the identifier; and
placing at least some of the value in the value account associated with the identifier.

5. The method of managing a payment card system according to claim 4, wherein the step of receiving value comprises receiving value from the payment card user.

6. The method of managing a payment card system according to claim 4, wherein the step of receiving value comprises receiving value from a retailer.

7. The method of managing a payment card system according to claim 1, wherein the step of associating a third party with the payment card comprises:
receiving information sufficient to identify the third party; and modifying a payment card record based on the information sufficient to identify the third party.

8. The method of managing a payment card system according to claim 7, wherein the information sufficient to identify the third party comprises information sufficient to identify a customer account with the third party.

9. The method of managing a payment card system according to claim 1, wherein the step of receiving a request from a payment card user to transfer at least some of the value to the third party comprises:
receiving an indication of an amount of value to transfer.

10. The method of managing a payment card system according to claim 9, further comprising:
determining an amount owed to the third party; and
providing to the payment card user an indication of the amount owed to the third party.

11. The method of managing a payment card system according to claim 1, wherein the third party is the payment card user.

12. The method of managing a payment card system according to claim 1, wherein at least a second third party is associated with the payment card.

13. The method of managing a payment card system according to claim 11, wherein the step of receiving a request from a payment card user to transfer at least some of the value to the third party comprises:
receiving an identifier associated with the payment card;
providing an indication of the third parties associated with the payment card;
receiving a selection of at least one of the third parties; and
receiving an indication of an amount of value to transfer.

14. A system for managing a payment card system comprising:
at least one payment card;
a database comprising a plurality of records, the plurality of records comprising information related to the at least one payment card;
at least one communication device; and
a processor in communication with the database and in selective communication with the least one communication device, the processor being configured to:
activate the at least one payment card;
associate value with the at least one payment card;
associate a third party with the at least one payment card;
receive an identifier associated with the payment card;
determine an amount of value associated with the payment card;
provide an indication of the amount of value associated with the bill payment card to the payment card user;
receive a request to transfer at least some of the value to the third party; and
initiate a transfer of the at least some of the value to the third party.

15. A method for managing the transfer of value to a third party using a payment card comprising:
providing the payment card to a user;
activating the payment card;
initiating a transaction associated with the payment card;
receiving an identifier associated with the payment card;
associating value with the payment card;
determining an amount of value associated with the payment card;
providing an indication of the amount of value associated with the bill payment card to the payment card user;
associating at least one third party with the payment card;
selecting a third party to be associated with the transaction;
receiving from the user an amount of value to transfer to the third party;
transferring to the third party the amount of value; and
terminating the transaction.
